Europäisches Patentamt

European Patent Office

Office européen des brevets

(11) Veröffentlichungsnummer: **0 005 708**
A1

# EUROPÄISCHE PATENTANMELDUNG

(21) Anmeldenummer: **79100179.5**

(22) Anmeldetag: **22.01.79**

(51) Int. Cl.²: **B 01 D 15/08**

(30) Priorität: **25.02.78 DE 2808154**

(43) Veröffentlichungstag der Anmeldung:
**12.12.79 Patentblatt 79/25**

(84) Benannte Vertragsstaaten:
**FR GB IT NL SE**

(71) Anmelder: **Röhm GmbH**
**Kirschenallee**
**D-6100 Darmstadt(DE)**

(72) Erfinder: **Böing, Joseph, Dr.**
**Friedrich-Ebert-Strasse 42a**
**6104 Seeheim(DE)**

(72) Erfinder: **Müller, Hermann Adolf**
**D-6101 Darmstadt-Arheilgen**
**Kleiststrasse 32(DE)**

(54) Gelfiltrationskolonne.

(57) Bei einer Gelfiltrationskolonne für Trennverfahren im technischen Massstab wird das Problem der Verdichtung der Gelfüllung (4), die zu Durchsatzverminderung und unscharfer Trennung führt erfindungsgemäss dadurch gelöst, dass die mit einem Filtergel ausgefüllte Gelkammer (2) durch parallel zur Kolonnenwand (1) angeordnete Zwischenwände (3) unterteilt wird, die kürzer als die Gelkammer (2) sind und vorzugsweise aus konzentrischen Rohren (3) in Abständen von 20 bis 120, vorzugsweise 40 bis 80 mm bestehen.

Fig 1

EP 0 005 708 A1

0005708

Verfahren und Kolonne zur Gelfiltration

Die Erfindung betrifft eine verbesserte Gelfiltrationskolonne und ein verbessertes Gelfiltrationsverfahren unter Anwendung der Kolonne.

Die Gelfiltration ist im Laboratoriumsmaßstab eine einfache und sichere Methode, um verhältnismäßig kleine Mengen wäßriger Lösungen, die hochmolekulare Anteile, z.B. Proteine, und niedermolekulare Anteile, z.B. Salze, enthalten, in ihre Bestandteile zu zerlegen. Bei gleichmäßiger Einleitung der aufzutrennenden Lösung und des anschließend verwendeten Elutionsmittels lassen sich in der Regel scharf begrenzte Fraktionen der in dem aufgegebenen Stoffgemisch enthaltenen Bestandteile mit abnehmendem Molekulargewicht eluieren.

Die Übertragung des Verfahrens in den technischen Maßstab, bei dem Kilogramm-Mengen an Stoffgemischen in Form wäßriger Lösungen aufzutrennen sind, bereitet oft erhebliche Schwierigkeiten. Die Durchflußleistung, die von der Packungsdichte der Gelsäule und von der Viskosität und der Chargenmenge der zu verarbeitenden Lösung abhängig ist, nimmt mit zunehmendem Kolonnenquerschnitt infolge zunehmender Verdichtung der Gelfüllung ab. Gleichzeitig ändert sich das Trennverhalten. Da ein gleichmäßiger Flüssigkeitsstrom unerläßlich ist, um eine scharfe und reproduzierbare Fraktionierung des Stoffgemisches zu erreichen, werden sowohl die zu zerlegende Lösung als auch das Elutionsmittel meistens mit konstantem Fördervolumen in die Kolonne eingepumpt. Wenn die Flüssigkeitsdurchlässigkeit der Gelfüllung unter das Fördervolumen der Pumpe absinkt, baut sich in der Eintrittskammer der Kolonne ein Flüssigkeitsstaudruck auf, der das Gel noch stärker verdichtet und die Durchlässigkeit weiter vermindert. In diesem Stadium muß das Verfahren unterbrochen und die Gelfüllung in einem zeitraubenden Verfahrensgang in den ursprünglichen Zustand zurückgeführt werden.

Derartige Betriebsstörungen lassen sich vermeiden oder wenigstens verzögern, wenn man die Kolonnenfüllung in eine Vielzahl von flachen Schichten unterteilt. Darunter leidet jedoch die Schärfe der Fraktionierung. Außerdem wird die erforderliche Apparatur größer und teurer und die Beschickung mit frischem Gel und die Entnahme des gebrauchten Gels werden umständlicher. Das gilt in noch stärkerem Maße, wenn man anstelle einer Kolonne mit großem Querschnitt eine Vielzahl von dünnen Kolonnen in Parallelschaltung einsetzt.

Weitere Maßnahmen zur Verminderung dieser Nachteile sind die Verdünnung der zu behandelnden Lösung, um ihre Viskosität herabzusetzen, und die Verminderung der Chargenmenge und Durchflußgeschwindigkeit. Alle diese Maßnahmen setzen die Gesamtleistung der Kolonne herab.

Aus der US-PS 3 856 681 ist eine Chromatographiekolonne bekannt, die aus einer Vielzahl dünner Schichten des chromatographischen Trennmaterials besteht, die parallel zur Kolonnenachse verlaufen. Die einzelnen Schichten sind durch inerte Kunststoff- oder Metallfolien voneinander getrennt. Die Höhe der Säule wird durch die Länge der Trennfolien festgelegt, d.h. die Säulenfüllung

- 3 -

schließt am oberen und unteren Ende der Säule genau mit der Oberkante der Trennfolien ab. Abgesehen von der umständlichen Herstellungsweise der Säule, bei der ein mit dem chromatographischen Füllmaterial beschichtetes Folienband zu einer Säule gewickelt wird, ist es schwierig, eine gleichmäßige Gelfüllung in allen vertikalen Segmenten der Säule zu gewährleisten. Dadurch kommt es zu ungleichmäßigen Trennungsbedingungen in den vertikalen Säulensegmenten, mit der Folge von entsprechend verminderter Trennschärfe.

Es war die Aufgabe zu lösen, eine Gelfiltrationskolonne für den Betrieb im technischen Maßstab zu schaffen, deren Flüssigkeitsdurchlässigkeit auch bei andauerndem Betrieb nicht nachläßt und die ein dem Laboratoriumsmaßstab entsprechendes Trennverhalten bei gleicher Leistung pro Flächeneinheit zuläßt. Die Kolonne soll weiterhin einfach im Aufbau und leicht zu füllen und zu entleeren sein. Diese Aufgabe wird durch die in den Ansprüchen gekennzeichnete Gelfiltrationskolonne gelöst.

Die in der Gelkammer der Kolonne angeordneten Zwischenwände verhindern wirkungsvoll eine Verdichtung der Gelfüllung. Es lassen sich Säulen von beliebig großem Querschnitt und jeder gewünschten Höhe erstellen. Eine größere wirksame Kolonnenhöhe läßt sich mit nur wenig erhöhtem Aufwand auch durch Hintereinanderschalten von zwei oder mehr Säulen erreichen. Als Füllung werden die gebräuchlichen Dextran-Gele, Polyacryl-Gele oder andere Gele verwendet.

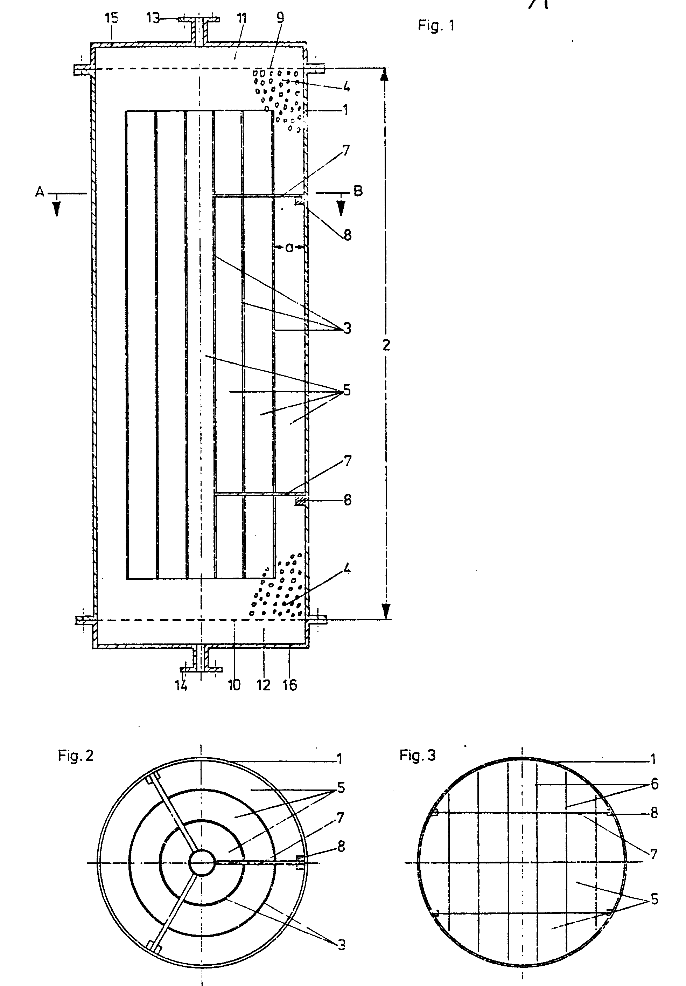

Zweckmäßige Ausführungsformen der erfindungsgemäßen Gelfiltrationskolonnen sind in den Figuren 1 bis 3 dargestellt.

F i g u r   1   zeigt einen senkrechten Schnitt durch die Mittelebene der Kolonne.

Figur 2 stellt einen Querschnitt in der Ebene A-B der in Figur 1 gezeigten Kolonne dar.

Figur 3 zeigt einen gleichartigen Schnitt bei etwas veränderter Bauart der Zwischenwände.

Erfindungsgemäß sind die Zwischenwände (3) kürzer als die Gelkammer (2), so daß die Gelfüllung (4) oben und unten über das Ende der Zwischenwände hinausragt. Ein Längenunterschied von 5 bis 20 %, vorzugsweise etwa 10 %, der Gelkammerhöhe ist in der Regel am vorteilhaftesten. Dadurch werden übereinstimmende Verfahrensbedingungen in allen vertikalen Kolonnensegmenten (5) geschaffen, was wiederum eine gleichmäßige Trennung in jedem Segment und somit eine hohe Trennschärfe gewährleistet.

Um die Bedingungen in allen vertikalen Segmenten so gleichmäßig wie möglich zu gestalten, werden die Zwischenwände untereinander und von der Kolonnenwand (1) in möglichst gleichmäßigen Abständen (a) angeordnet. Die erforderlichen Abstände hängen etwas von der Größe der Gelpartikel ab; feine Partikel erfordern geringe Abstände, gröbere Partikel lassen größere Abstände zu. Im allgemeinen betragen die Abstände 20 bis 120 mm, vorzugsweise 40 bis 80 mm. Es genügt, wenn diese Abstände zwischen den Wänden eingehalten werden, während längs der Wände keine weitere Unterteilung notwendig ist.

Die Anordnung der Zwischenwände richtet sich nach der äußeren Form der Kolonnenwand (1) und der herstellungsbedingten Zweckmäßigkeit. Konzentrische Rohre (3) oder parallel gestapelte Platten (6) sind ebenso einfach wie zweckmäßig. Untereinander sind die Zwischenwände durch Halterungen (7) verbunden, die ebenfalls als durchgehende Zwischenwände gestaltet sein können, aber auch aus einzelnen schmalen Abstandhaltern bestehen können.

Die Gelkammer (2) wird zweckmäßig mit Siebböden (9, 10) gegen die Ein- und Austrittskammern (11, 12) abgegrenzt, wobei die Öffnungen in den Siebböden kleiner als der Durchmesser der gequollenen Gelpartikel ist. Die Zu- und Ablaufleitungen (13, 14) sind an die Ein- und Austrittskammern (11, 12) angeschlossen.

Der Boden (16) und Deckel (15) der Kolonne sind ebenso wie die Siebböden (9, 10) lösbar angeordnet, um die Beschickung und Entleerung der Gelfüllung zu erleichtern. Auch die mit den Halterungen (7) untereinander zu einer festen Baueinheit verbundenen Zwischenwände (3) können als ganzes herausnehmbar sein. Die Enden der Halterungen (7) können z.B. auf Konsolen (8) an der Kolonnenwand (1) aufliegen.

Das Gelmaterial wird im allgemeinen als trockenes Granulat eingefüllt und quillt bei der Füllung mit Wasser bzw. der für den Betrieb zu verwendenden wäßrigen Flüssigkeit etwas auf. Die Menge des eingefüllten Gelmaterials wird vorzugsweise so bemessen, daß ihr Quellvolumen, das sie bei räumlich ungehinderter Aufquellung einnimmt, etwas mehr als das freie Gelkammervolumen einnehmen würde. Im gequollenen Zustand steht die Gelfüllung daher unter einem leichten Druck, der der Neigung zur Verdichtung der Füllung entgegenwirkt. Wichtig ist ein gleichmäßiger Quellungsdruck in allen vertikalen Segmenten, weil nur dann die Trennwirkung in allen Segmenten gleich und die Trennschärfe der ganzen Säule hoch ist. Die gleichmäßige Aufquellung ist dadurch gewährleistet, daß die Zwischenwände kürzer als die Gelkammer sind. Kleine Ungleichmäßigkeiten in den Gelmengen, die in den einzelnen Segmenten vorhanden sind, gleichen sich selbsttätig aus, wenn die Gelfüllung im Laufe des Quellvorganges über die Oberkante der Zwischenwände hinausquillt.

- 6 -

Im Betriebszustand ist die Kolonne im allgemeinen vollständig mit Flüssigkeit gefüllt. Die Durchströmungsrichtung beim Betrieb ist beliebig.

Die erfindungsgemäße Gelfiltrationskolonne wird ebenso wie entsprechende bekannte Vorrichtungen in zwei Arbeitsschritten betrieben. Beim Aufgabeschritt wird die ein Stoffgemisch aus hoch- und niedermolekularen Bestandteilen enthaltende wäßrige Lösung in die Kolonne einlaufen gelassen, während man gleichzeitig eine gleichgroße Menge der ursprünglichen Flüssigkeitsfüllung abzieht. Anschließend erfolgt die Elution, wobei zuerst die höchstmolekularen Lösungsbestandteile eluiert werden. Wenn die niedrigstmolekularen Bestandteile vollständig eluiert sind, kann mit einem neuen, aus einem Aufgabe- und einem Elutionsschritt bestehenden Arbeitszyklus begonnen werden.

Um auch über viele Arbeitszyklen hinweg einer allmählichen Verdichtung entgegenzuwirken und unveränderte Betriebsverhältnisse unbegrenzt aufrechtzuerhalten, empfiehlt es sich, nach jedem Arbeitszyklus die Durchströmungsrichtung umzukehren, da die Kolonne in jeder Strömungsrichtung gleiche Ergebnisse liefert.

0005708

- 7 -

<u>Patentansprüche</u>

1. Gelfiltrationskolonne mit wenigstens einer mit einem
   Filtergel ausgefüllten Gelkammer, die durch parallel
   zur Kolonnenwand angeordnete Zwischenwände unterteilt
   ist,

   dadurch gekennzeichnet, daß die Zwischenwände kürzer als die Gelkammer sind.


2. Gelfiltrationskolonne nach Anspruch 1, dadurch gekennzeichnet, daß die Zwischenwände untereinander und
   von der Kolonnenwand Abstände von 20 bis 120, vorzugsweise 40 bis 80 mm, haben.

3. Gelfiltrationskolonne nach den Ansprüchen 1 und 2,
   dadurch gekennzeichnet, daß die Zwischenwände aus
   konzentrischen Rohren bestehen.

4. Gelfiltrationskolonne nach den Ansprüchen 1 bis 3,
   dadurch gekennzeichnet, daß das Quellvolumen des in
   der Gelkammer eingeschlossenen Gels größer als das
   freie Volumen der Gelkammer ist.

0005708

1/1

Fig. 1

Fig. 2

Fig. 3

0005708

Nummer der Anmeldung

EP 79 10 0179

Europäisches Patentamt

## EUROPÄISCHER RECHERCHENBERICHT

| | EINSCHLÄGIGE DOKUMENTE | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |

<table>
<tr><td>A</td><td>US - A - 3 298 527 (J.L. WRIGHT)</td><td rowspan="8"></td><td rowspan="8">B 01 D 15/08</td></tr>
<tr><td>DA</td><td>US - A - 3 856 681 (C.N. HUBER)</td></tr>
<tr><td>A</td><td>GB - A - 1 203 439 (PHARMACIA FINE CHEMICALS AB)</td></tr>
<tr><td>A</td><td>US - A - 3 657 864 (F.R. DAVIS Jr.)</td></tr>
<tr><td>A</td><td>FR - A - 2 331 363 (URANERZ BERG-BAU GmbH)</td></tr>
<tr><td>A</td><td>US - A - 2 989 383 (L.N. MILLER)</td></tr>
<tr><td>A</td><td>FR - A - 963 820 (LAUGHLIN EQUIPMENT CORP.)</td></tr>
<tr><td>A</td><td>US - A - 4 055 493 (S. SAWANISHI)<br>* Spalte 1, Zeilen 44-46 *<br><br>----</td></tr>
</table>

RECHERCHIERTE SACHGEBIETE (Int. Cl.²)

B 01 D 15/08
15/00
G 01 N 31/08
31/06

KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 11-06-1979 | HOORNAERT |

EPA form 1503.1   06.78